# EUROPÄISCHE PATENTSCHRIFT

(11) **EP 0 489 134 B1**
(45) Veröffentlichungstag und Bekanntmachung des Hinweises auf die Patenterteilung: **27.07.1994**
(21) Anmeldenummer: 91911251.6
(22) Anmeldetag: 24.06.1991
(51) Int. Cl.: F16C 33/46, F16C 33/56

(54) **RADIAL-WÄLZLAGER**
RADIAL ROLLER BEARING
PALIER A ROULEMENT RADIAL

(30) Priorität: 27.06.1990 CH 2136/90
(43) Veröffentlichungstag der Anmeldung: 10.06.1992
(73) Patentinhaber: HYDREL AG, CH-8590 Romanshorn (CH)
(72) Erfinder: GEHRING, Rudolf, CH-9315 Neukirch-Egnach (CH)
(74) Vertreter: Münch, Otto
(86) Internationale Anmeldenummer: CH9100138
(87) Internationale Veröffentlichungsnummer: WO9200463

(56) Entgegenhaltungen:
- EP-A- 0 170 017
- DE-A- 3 418 621
- FR-A- 584 717
- FR-A- 1 261 047

## Beschreibung

Die Erfindung betrifft ein Radial-Wälzlager mit einem Käfig zur Trennung und je nach Bauart zur Führung der Wälzkörper. Bei den bekannten Wälzlagern dieser Art wird der Käfig seinerseits üblicherweise in Gleitkontakten der anderen Wälzlager-Elemente, meist auf den Wälzkörpern oder den Borden des Innen- oder Aussenringes, geführt, in einigen Fällen in einem Wällzkörperkranz zwischen Käfig und einem der Lagerringe. Fehlen in einem Wälzlager die Borde, wie z.B. bei Nadelkränzen, kann die Käfigführung auch von entsprechend gestalteten Flächen der Anschlussteile übernommen werden.

Geschmiert werden diese Lager in der überwiegenden Zahl der Anwendungsfälle mit Fett, in den meisten anderen Fällen mit Oel und in wenigen Extremfällen mit Festschmierstoffen, die zum Teil durch Beschichten der Wälzkomponenten aufgebracht werden. Fettschmierung wird deshalb am häufigsten gewählt, weil sie weitaus am einfachsten und am billigsten ist. Mit Fettschmierung lässt sich aber keine Wärme abführen, so dass für Lagerungen mit hohen Umfangsgeschwindigkeiten meist Oelschmierung zur Anwendung kommt. Das zur Kühlung notwendige Oel bewirkt jedoch eine höhere Walkarbeit im Lager, was höhere Lagertemperaturen zur Folge hat. Bei Lagerungen, bei denen trotz hoher Drehzahl eine tiefe Temperatur wichtig ist, z.B. bei Werkzeugmaschinen, werden deshalb aufwendige Verfahren benutzt, bei denen die Schmierung und die Kühlung getrennt werden. Dabei wird die Schmierung durch eine genau dosierte, kontinuierlich zugeführte Minimalölmenge bewerkstelligt, während die Kühlung durch den Transportluft-Strom des Oels übernommen wird.

Wird die entstehende Wärme unabhängig vom Schmiermittel abgeführt, z.B. durch Luft- oder äussere Wasserkühlung, können mit Spezialfetten ebenso hohe Drehzahlen erreicht werden wie bei ölgeschmierten Lagern. Vor allem bei Fettschmierung wird die erreichbare Drehzahl dadurch begrenzt, dass die Gleitkontakte der Käfige nicht mehr sicher zu schmieren sind und deshalb zuviel Reibwärme erzeugt wird, was oft zum Ausfall des Lagers führt. Es werden deshalb verschiedene spezielle Käfigmaterialien und Beschichtungen eingesetzt, welche die Reibung an diesen Gleitstellen verringern. Obwohl diese Massnahmen die Drehzahlgrenze eines Lagers zu erhöhen vermögen, genügen sie für viele Anwendungsfälle nicht.

In der DE-C-45681 und der FR-A-584.717 sind Lager beschrieben, bei denen die Käfige durch Wälzkörperkränze zwischen dem Käfig und einem der Lagerringe geführt werden. Dadurch wird zwar die Gleitreibung vermieden, der Wälzkörperkranz benötigt aber seinerseits einen Käfig, der zwangsläufig labil und damit schwingungsanfällig ist. Zudem besteht die Gefahr, dass die Wälzkörper des Führungslagers wegen ihrer geringen Belastung nicht angetrieben werden. Dies führt zu Gleiteffekten mit sehr hoher Wärmeentwicklung und rascher Zerstörung des Lagers. Im weiteren sind diese Wälzkörperkränze auch sehr empfindlich auf temperaturbedingte Massänderungen der verschiedenen Wälzlagerkomponenten, die bei schnellaufenden Lagern zwangsläufig auftreten. Es ist deshalb auch nicht möglich, diese Wälzkörperkränze spielfrei oder sogar mit innerer oder äusserer Vorspannung auszuführen, weil dies unter reellen Betriebsbedingungen rasch ein Heisslaufen und Blockieren zur Folge hätte.

Die Ausführungsformen gemäss dieser beiden Patente haben sich deshalb in der Praxis nicht durchsetzen können.

Bei öl- und fettgeschmierten Lagern sind Käfigschwingungen ein weiteres Phänomen, welches deren maximal erreichbare Drehzahl begrenzt.

Der Erfindung liegt deshalb die Aufgabe zugrunde, ein Wälzlager der eingangs beschriebenen Art zu schaffen, das die Nachteile der bisherigen Ausführungen vermeidet und insbesondere höhere Umfangsgeschwindigkeiten mit Fett- oder Oelschmierung ermöglicht oder bei gleichen Betriebsbedingungen tiefere Lagertemperaturen ergibt. Diese Aufgabe wird erfindungsgemäss dadurch gelöst, dass der Käfig des Wälzlagers seinerseits in mehreren kleinen, am Umfang verteilten und vorzugsweise als kugelgelagerte Stützrollen ausgebildeten Lagern wälzgeführt ist. Diese Lager sind vorzugsweise zur Aufhebung des Käfig-Führungsspiels vorbelastet, weisen aber inneres Lagerspiel auf.

Nachfolgend werden Ausführungsbeispiele der Erfindung anhand der Zeichnung erläutert. Darin zeigt:
- Fig. 1 und 2: ein erstes Ausführungsbeispiel im Axial- und Radialschnitt,
- Fig. 3 und 4: eine Variante des Ausführungsbeispiels nach Fig. 1 und 2,
- Fig. 5 und 6: je eine weitere Variante des Ausführungsbeispiels nach Fig. 1 bis 4,
- Fig. 7, 8 und 9: ein zweites Ausführungsbeispiel im Axial- und Radialschnitt sowie in einer Draufsicht,
- Fig. 10 und 11: ein drittes Ausführungsbeispiel in der Darstellung entspr. Fig. 1 und 2,
- Fig. 12 und 13: ein viertes Ausführungsbeispiel in der Darstellung entspr. Fig. 1 und 2.

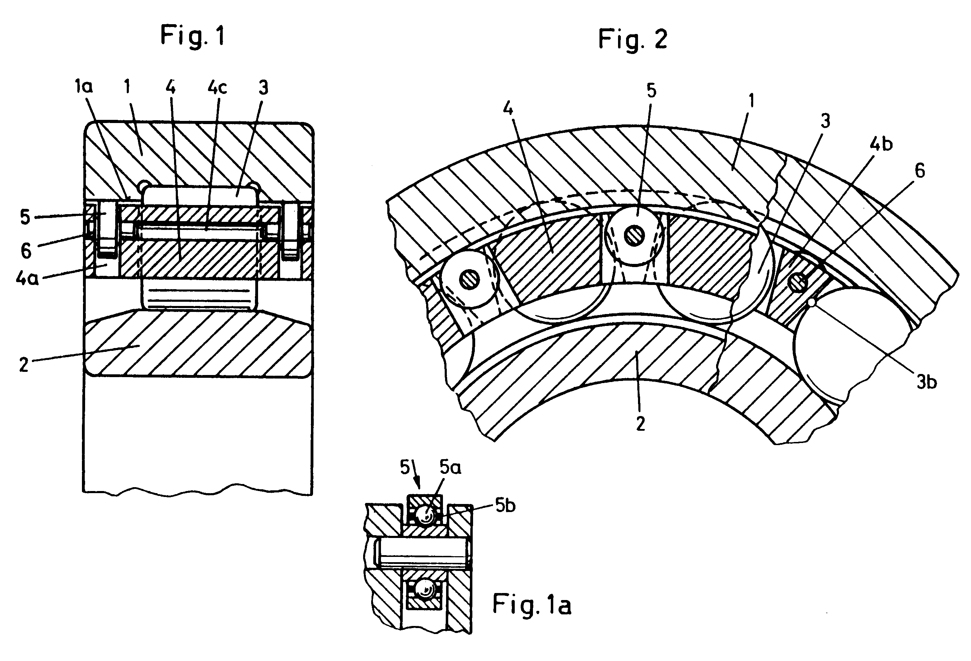

In den Fig. 1 und 2 ist ein Teil eines Rollenlagers dargestellt. Es besteht aus einem Aussenring 1, einem Innenring 2, mehreren als Rollen ausgebildeten Wälzkörpern 3 sowie einem Käfig 4 zur Trennung und/oder Führung der Wälzkörper 3. Der Aussenring 1 hat beidseits ein Ringbord 1a mit einer zylindrischen Innenfläche. In mindestens drei der die Wälzkörper 3 trennenden Stegen 4b des Käfigs 4 sind achsparallele Durchgangsbohrungen 4c gebohrt. Benachbart den beiden Stirnseiten sind an den Stellen der Bohrungen 4c radiale Schlitze 4a in den Käfig 4 gefräst. In diese Schlitze 4a sind Kugellager als Stützrollen 5 eingesetzt und durch Stifte 6 gelagert, die in die Bohrungen 4c eingepresst sind. Die Stützrollen 5 rollen an der zylindrischen Innenfläche der Ringborde 1a ab. Dadurch ist der Käfig 4 wälzgeführt. Die als Kugellager ausgebildeten Stützrollen 5 haben wiederum Käfige 5b. Die Gleitgeschwindigkeit dieser Stützrollenkäfige 5b ist aber nur etwa halb so gross wie diejenige des Lagerkäfigs 4. Die Stützrollen 5 sind zudem nur leicht belastet und haben kleine Abmessungen. Sie können deshalb mit Wälzkörpern, vorzugsweise Kugeln 5a aus speziellen Werkstoffen und Käfigmaterialien bestückt werden, die schmierungstechnisch wesentlich günstiger sind als diejenigen des Hauptlagers. Diese kleinen Wälzlager zur Käfigführung sind deshalb für extrem hohe Drehzahlen geeignet.

Bei kleinen Lagern, z.B. mit Wellen-φ unter 50 mm, wird das Wälzlager der Stützrolle extrem klein. In solchen Fällen ist es auch möglich, den Aussenring der Stützrollen mittels eines kleinen Gleitlagers auf dem Stift 6 zu lagern. Auch in diesem Fall beträgt die Gleitgeschwindigkeit am Gleitkontakt nur ein Bruchteil derjenigen, welche bei einem normalen Lager zwischen dem Käfig und dessen Führungsflächen auftritt. Die entscheidende Wälzführung des Käfigs wird dadurch nicht verändert. Das erfindungsgemässe Lager hat den weiteren Vorteil, dass die thermische Belastung des Käfigs 4 dank seiner Wälzführung wesentlich geringer ist als bei herkömmlichen Lagern. Auch Käfigmaterialien mit hohem Wärmeausdehnungskoeffizienten und Aussenbordführung sind deshalb geeignet.

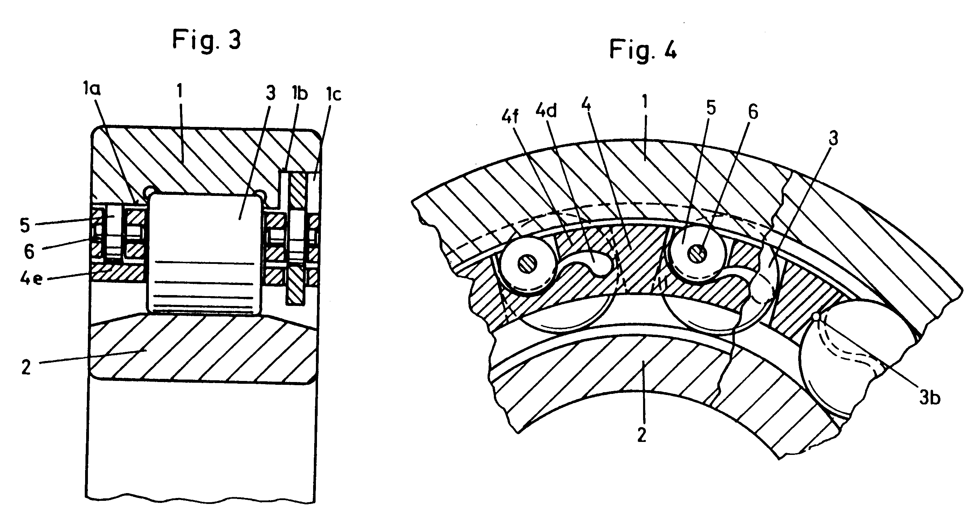

Besonders günstige Verhältnisse erzielt man, wenn die Stützrollen 5 gefedert befestigt sind und der Käfig dadurch absolut spielfrei in den Borden 1a gelagert ist. Die Federcharakteristik kann frei gewählt und optimal auf den Zweck abgestimmt werden. Dadurch werden Käfigschwingungen weitgehend verunmöglicht und die Drehzahlgrenze kann noch weiter gesteigert werden. Eine solche Lösung zeigt die Variante nach Fig. 3 und 4. Hier werden durch geeignet geformte Schlitze 4d aus der Käfigwange 4e Federarme 4f gebildet, in denen die Bolzen 6 für die Stützrollen 5 eingepresst sind. Auf der rechten Seite der Fig. 3 ist eine prinzipiell gleiche Variante dargestellt, bei der jedoch der Durchmesser der Führungsfläche 1b durch eine Aussparung 1c vergrössert ist. Dadurch lassen sich grössere Stützrollen 5 einbauen, wodurch deren Drehzahl verringert wird. Aus fertigungs- und anwendungstechnischen Gründen beträgt jedoch der Aussendurchmesser der Stützrollen höchstens ein Drittel des Käfig-Aussendurchmessers. Die kleinere Drehzahl der Stützrollen verringert die dynamische Beanspruchung deren Kugeln 5a.

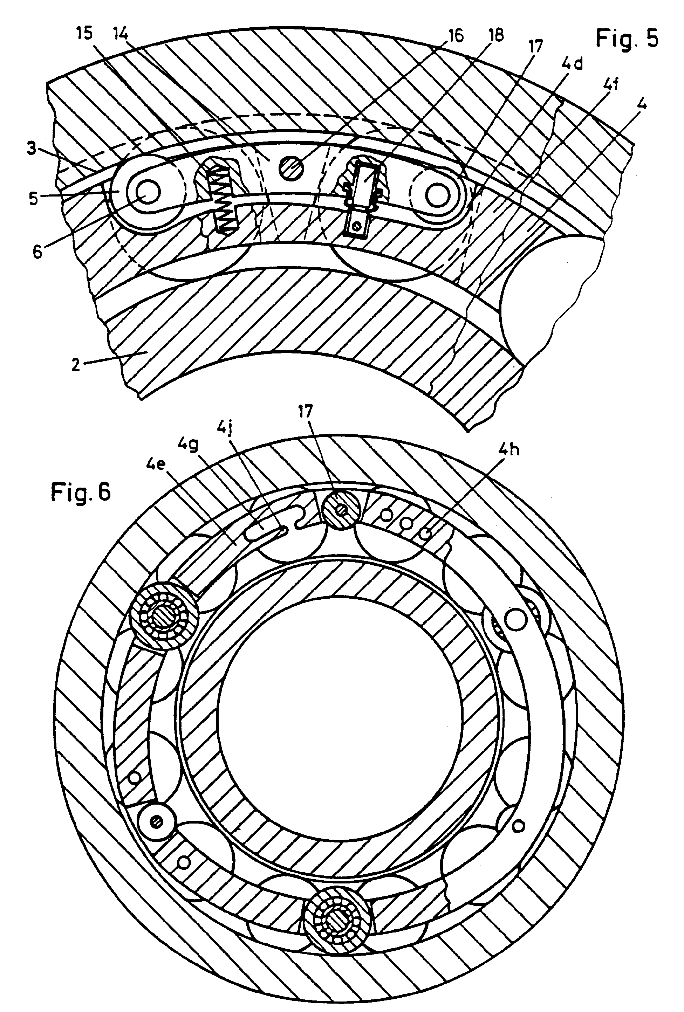

Eine weitere Ausführungsmöglichkeit dieses Prinzips besteht darin, dass der ganze Käfig so elastisch ist, dass dieser selbst durch leichte Verformung als Anpressfeder wirkt. Sie ist in Verbindung mit einem weiteren Ausführungsdetail in Fig. 6 dargestellt. Diese Variante eignet sich vor allem bei Ausführungen, in welchen bloss pro Seite drei Stützrollen 5 vorhanden sind und bei Einsatz von Käfigmaterialien mit tiefem Elastizitätsmodul, also z.B. bei Kunststoffkäfigen. Solche Käfige weisen zudem den wichtigen Vorteil eines sehr geringen Gewichtes und damit kleiner Massenkräfte auf.

Bei allen Ausführungen mit umlaufenden Stützrollen zur Käfigführung treten neben statischen Kräften durch die Federbelastung dynamische Zusatzkräfte infolge der Zentrifugalbeschleunigung des Lagerinnenringes und des Bolzens 6 auf. Bei sehr hohen Drehzahlen können diese Zusatzkräfte enorme Lagerbelastungen ergeben. Für diese Anwendungen sind deshalb die in den Figuren 5 und 6 gezeigten Ausführungsformen vorgesehen.

In der Ausführung gemäss Fig. 5 sind mindestens 3 Stützrollen 5 mittels Bolzen 6 in je einer Wippe 14 befestigt. Die Wippe 14 ist ihrerseits auf dem Bolzen 16 schwenkbar gelagert und trägt an ihrem anderen Ende ein Ausgleichsgewicht 17. Die Stützrolle 5 wird mittels Feder 15 über die Wippe 14 an die Führungsfläche 1b des Aussenringes angepresst. Bei drehendem Lager wirken nun auf die Wippe 14 zusätzlich Fliehkräfte durch die Massen des Bolzens 6, des Innenringes und des Ausgleichsgewichtes 17. Das Ausgleichsgewicht 17 ist so gewählt, dass sich bei jedem Betriebszustand die optimale Belastung der Stützrolle automatisch ergibt. Durch ein Dämpfungselement 18 können Schwingungen zusätzlich reduziert werden.

In der Ausführungsform gemäss Fig. 6 ist das Prinzip mit den Ausgleichsgewichten auf einem Käfig angewandt, bei dem die Elastizität des Käfigs die Anpressung der Stützrollen bewirkt. Durch die Stützrollen 5 wird der im Normalfall ursprünglich runde Käfig 4 zu einem Polygon verformt. Zwischen den Stützrollen 5 werden nun Ausgleichsgewichte 17 am Käfig 4 angebracht. Unter Fliehkrafteinfluss beim drehenden Lager übt das Ausgleichsgewicht Kräfte auf den Käfig aus und versucht, den Käfig zu verformen. Dadurch wird die Wirkung der Fliehkraft kompensiert, welche Stützrollen-Innenring und Bolzen 6 auf den Käfig ausüben. Die Stützrolle 5 ist damit drehzahlunabhängig optimal belastet.

Käfige dieser Bauart sind normalerweise aus Kunststoff hergestellt, der ein hohes Eigendämpfungsvermögen aufweist, sodass bei dieser Ausführungsform auch keine Käfig-Eigenschwingungen auftreten.
In speziellen Anwendungen, z.B. bei sehr hohen Temperaturen, sind Metallkäfige notwendig, welche ein geringeres Eigendämpfungsvermögen aufweisen. In diesen Fällen kann es vorteilhaft sein, die zwischen Stützrollen 5 liegenden einzelnen Abschnitte der Käfigwange 4e unterschiedlich zu gestalten und/oder mit zusätzlichen Gewichtssteinen zu versehen. Dadurch hat jeder Abschnitt eine andere Eigenfrequenz, wodurch dem Entstehen von Eigenschwingungen des gesamten Käfigs wirksam entgegengewirkt wird.

In Fig. 6 ist diese Ausführung durch die Aussparungen 4g und die Löcher 4h dargestellt. Dabei bildet die Zunge 4j noch ein zusätzliches unabhängiges Schwingsystem, welches allfällige Eigenschwingungen des Käfigs durch Störungen weiter reduziert.

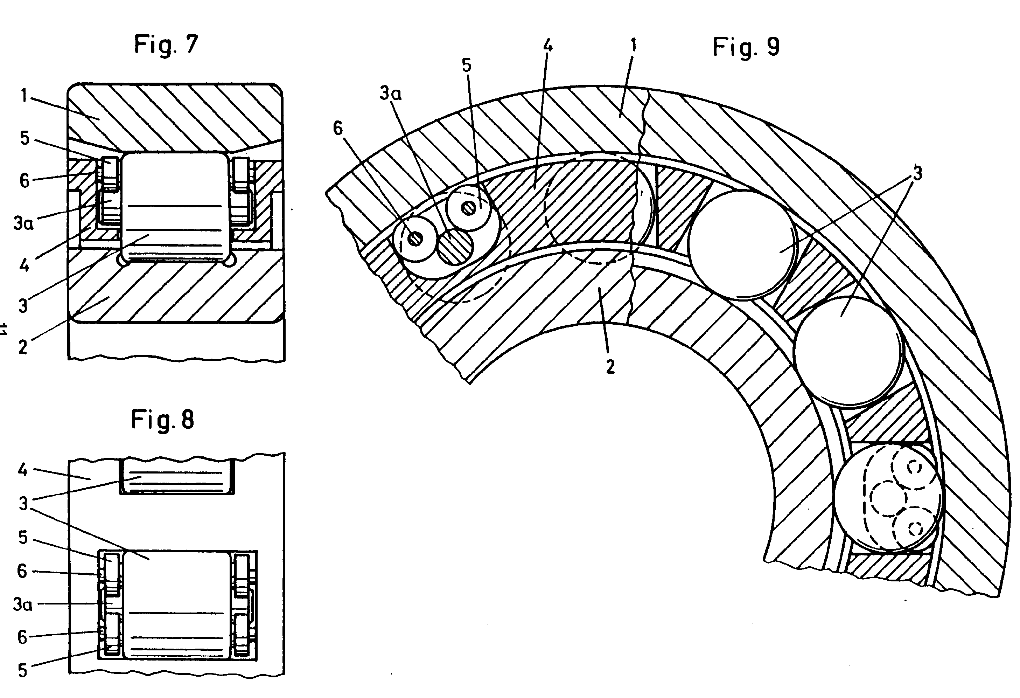

In den Fig. 7 bis 9 ist eine weitere Ausführungsform der Erfindung dargestellt, bei welcher der Käfig auf den Wälzkörpern geführt ist. Bei dieser Ausführungsform weisen mindestens drei der Wälzkörper 3 Zapfen 3a auf. Auf der zylindrischen Mantelfläche dieser Zapfen rollen jeweils zwei Stützrollen 5 ab, zweckmässig wiederum Kugellager, die im Käfig 4 drehbar gelagert sind und diesen damit über Wälzkontakte auf den Zylinderrollen 3 führen.

Auf eine analoge Weise kann auch bei Käfigen, die in den Borden 1a eines Lagerringes wälzgeführt sind, die Gleitreibung an den Stellen 3b zwischen den Wälzkörpern 3 und dem Käfig 4 eliminiert werden (Fig. 2). Die Erfahrung zeigt jedoch, dass dank der Schmierstoffzufuhr durch den drehenden Wälzkörper diese Gleitstelle viel höhere Geschwindigkeiten zulässt als der Gleitkontakt eines normalen Käfigs im Führungsbord. Aus wirtschaftlichen Gründen wird deshalb darauf verzichtet, bei bordgeführten Käfigen auch hier einen Wälzkontakt herzustellen.

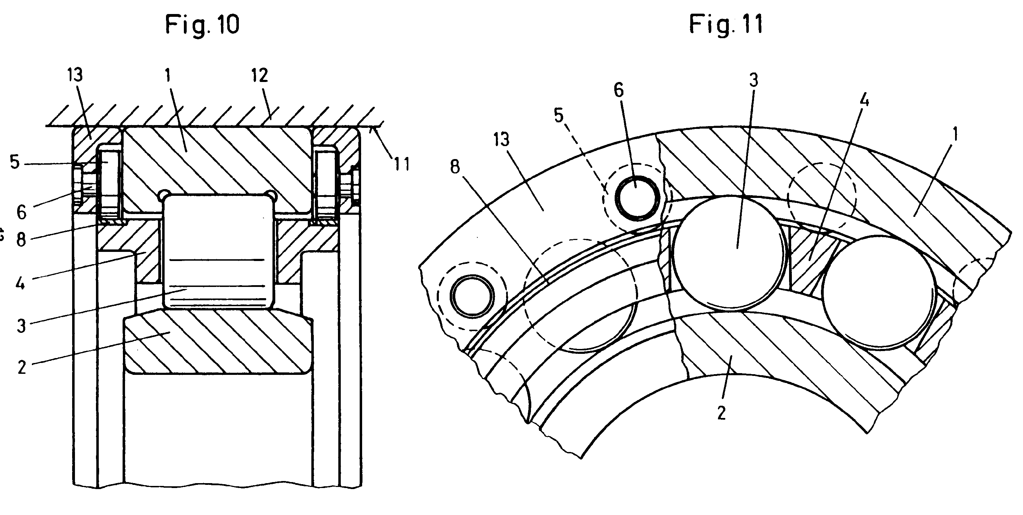

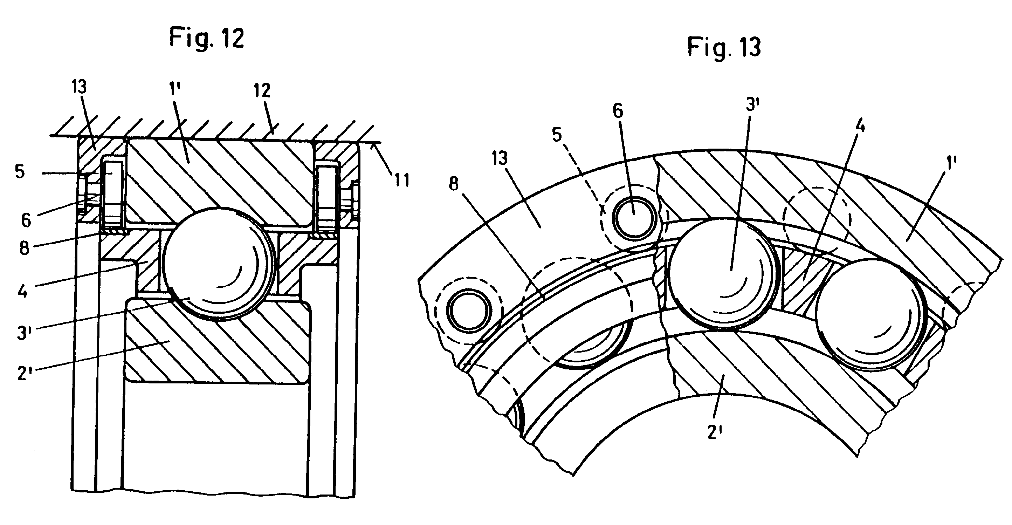

Bei der Ausführungsform nach Fig. 10 und 11 sind an beiden Stirnseiten des Aussenringes 1 in einer zylindrischen Bohrung 11 eines Bauteils 12, in welches der Aussenring 1 eingesetzt ist, zwei Ringe 13 zentriert. In diesen Ringen 13 sind je mindestens drei wiederum als Kugellager ausgebildete Stützrollen 5 drehbar gelagert. Die Stützrollen 5 rollen auf Bandagen 8 ab.

Bei allen Ausführungsvarianten, bei denen die Wälzführung des Käfigs auf einem Bord eines Lagerringes erfolgt, kann dies analog zu den beschriebenen Varianten mit Führung auf dem Aussenring alternativ auf den Borden des Innenringes realisiert werden. Ebenso kann die Wälzlagerung des Käfigs in geeigneten Flächen der Anschlusskonstruktion erfolgen anstatt auf Borden der Lagerringe. Die Führungsflächen für die Stützrollen 5 sind generell zylindrisch gezeichnet, weil das der serienmässigen Standardausführung der Lagerringe entspricht. Sie können aber ebenfalls bombiert ausgeführt werden, sodass das Profil der Führungsfläche im Längsschnitt zum Beispiel einem Kreisbogen oder einem sogenannten gotischen Bogen entspricht.

Das Kugellager ist eine wichtige Ausführungsvariante des erfindungsgemässen Wälzlagers. Bei der Ausführungsform nach Fig. 12 und 13, die ein Kugellager mit Kugeln 3′ betrifft, sind an beiden Stirnseiten des Aussenringes 1′ des Kugellagers in einer zylindrischen Bohrung 11 eines Bauteils 12, in welches der Aussenring 1′ eingesetzt ist, zwei Ringe 13 zentriert. In diesen Ringen 13 sind je mindestens drei wiederum als Kugellager ausgebildete Stützrollen 5 drehbar gelagert, die auf den Bandagen 8 abrollen.

Schliesslich sei noch bemerkt, dass die Ausführung nach Fig. 3 unsymmetrisch dargestellt wurde, und zwar mit der grossen Stützrolle nur rechts, um in ein und derselben Figur auf verschiedene Varianten hinzuweisen.

## Patentansprüche

1. Radial-Wälzlager mit mehreren Wälzkörpern (3) sowie einem Käfig (4) zur Trennung der Wälzkörper (3) voneinander, dadurch gekennzeichnet, dass der Käfig (4) mittels mehrerer über den Umfang verteilter Lager (5) wälzgeführt ist, deren Aussendurchmesser höchstens ein Drittel des Aussendurchmessers des Käfigs (4) beträgt.

2. Wälzlager nach Anspruch 1, dadurch gekennzeichnet, dass an einer zum Käfig (4) koaxialen Führungsfläche (1a) mindestens drei Stützrollen (5) abrollen, die am Käfig (4) drehbar gelagert sind.

3. Wälzlager nach Anspruch 2, dadurch gekennzeichnet, dass die Stützrollen (5) wälzgelagert sind.

4. Wälzlager nach Anspruch 2 oder 3, dadurch gekennzeichnet, dass die Stützrollen (5) federnd gegen die Führungsfläche (1a) vorbelastet sind.

5. Wälzlager nach Anspruch 4, dadurch gekennzeichnet, dass die Federn (4f) zur Vorbelastung der Stützrollen (5) einstückig mit dem Käfig (4) ausgebildet sind.

6. Wälzlager nach Anspruch 4, dadurch gekennzeichnet, dass der Käfig (4) derart ausgebildet ist, dass er eine Federwirkung zur Vorbelastung der Stützrollen (5) aufweist.

7. Wälzlager nach Anspruch 1, dadurch gekennzeichnet, dass der Käfig (4) einen ringförmigen Einsatz (8) aus härterem Material aufweist, auf welchem die Lager (5) zur Wälzführung des Käfigs (4) abrollen (Fig. 10).

8. Wälzlager nach Anspruch 7, dadurch gekennzeichnet, dass der Käfig (4) auf mindestens drei wälzgelagerten Stützlagern (5) abrollt (Fig. 10 bis 13).

9. Wälzlager nach einem der Ansprüche 1 bis 8, dadurch gekennzeichnet, dass mindestens drei der Wälzkörper (3) einen koaxialen, zylindrischen Zapfen (3a) aufweisen, der mit mindestens je einem am Käfig (4) drehbar wälzgelagerten Stützlager (5) zusammenwirkt.

10. Wälzlager nach einem der Ansprüche 2 bis 6, dadurch gekennzeichnet, dass die Führungsfläche (1a) an einem Ringbord eines Aussenringes (1) oder eines Innenrings (2) des Wälzlagers, an einer Bohrung (11) eines das Wälzlager aufnehmenden Bauteils (12) oder an einer durch das Wälzlager gelagerten Welle ausgebildet ist.

11. Wälzlager nach einem der Ansprüche 2 bis 6, dadurch gekennzeichnet, dass Elemente (17) vorhanden sind, welche eine fliehkraftabhängige Änderung der Kräfte auf die Stützrollen (5) bewirken.

12. Wälzlager nach Anspruch 11, dadurch gekennzeichnet, dass die Stützrollen (5) auf je einer Wippe (14) befestigt sind, welche im Käfig (4) schwenkbar gelagert ist und welche die Stützrolle (5) unter Wirkung einer Feder (15) und einer durch ein Ausgleichsgewicht (17) hervorgerufenen Fliehkraft an die Führungsfläche (1a) anpresst.

13. Wälzlager nach Anspruch 12, dadurch gekennzeichnet, dass zwischen der Wippe (14) und dem Käfig (4) ein Dämpfungselement (18) angebracht ist.

14. Wälzlager nach Ansprüchen 6 und 11, dadurch gekennzeichnet, dass an dem als Anpressreder für die Stützrollen (5) wirkenden elastischen Käfig (4) Ausgleichsgewichte (17) angebracht sind, deren Fliehkräfte den Käfig so belasten. dass die Stützrollen (5) bei jeder Drehzahl optimal an die Führungsfläche (1a) angepresst werden.

## Claims

1. Radial rolling bearing with a plurality of rolling members (3) and a cage (4) for separating the rolling members (3) from one another, characterised in that the cage (4) is guided by rolling contact by means of a plurality of bearings (5) which are distributed over the circumference and the external diameter of which is at most one third of the external diameter of the cage (4).

2. Rolling bearing according to claim 1, characterised in that at least three support rollers (5), which are rotatably mounted on the cage (4), roll on a guide surface (1a) which is coaxial with the cage (4).

3. Rolling bearing according to claim 2, characterised in that the support rollers (5) are mounted in a rolling manner.

4. Rolling bearing according to claim 2 or 3, characterised in that the support rollers (5) are preloaded against the guide surface (1a) by means of springs.

5. Rolling bearing according to claim 4, characterised in that the springs (4f) for preloading the support rollers (5) are integral with the cage (4).

6. Rolling bearing according to claim 4, characterised in that the cage (4) is formed such that it exhibits a spring action for preloading the support rollers (5).

7. Rolling bearing according to claim 1, characterised in that the cage (4) comprises an annular insert (8) of a harder material on which the bearings (5) roll to guide the cage (4) by rolling contact (Figure 10).

8. Rolling bearing according to claim 7, characterised in that the cage (4) rolls on at least three support bearings (5) which are mounted in a rolling manner (Figures 10 to 13).

9. Rolling bearing according to one of claims 1 to 8, characterised in that at least three of the rolling members (3) comprise a coaxial, cylindrical lug (3a) which co-operates with at least one respective support bearing (5) which is rotatably mounted in a rolling manner on the cage (4).

10. Rolling bearing according to one of claims 2 to 6,
characterised in that the guide surface (1a) is formed at an annular lip of an outer race (1) or an inner race (2) of the rolling bearing, at a bore (11) of a component (12) holding the rolling bearing or at a shaft which is mounted by means of the rolling bearing.

11. Rolling bearing according to one of claims 2 to 6, characterised in that elements (17) are provided which give rise to a change in the forces acting on the support rollers (5) which is dependent upon centrifugal forces.

12. Rolling bearing according to claim 11, characterised in that the support rollers (5) are secured to a respective rocker (14) which is pivotably mounted in the cage (4) and presses the support roller (5) against the guide surface (1a) under the action of a spring (15) and a centrifugal force produced by a balance weight (17).

13. Rolling bearing according to claim 12, characterised in that a damping element (18) is arranged between the rocker (14) and the cage (4).

14. Rolling bearing according to claims 6 and 11, characterised in that balance weights (17) are mounted on the elastic cage (4) acting as a pressure spring for the support rollers (5), the centrifugal forces of which weights load the cage such that the support rollers (5) are pressed against the guide surface (1a) in the best possible manner for each speed.

## Revendications

1. Roulement à charge radiale, avec plusieurs corps de révolution (3) ainsi qu'une cage (4) pour séparer les corps de révolution (3) les uns des autres, **caractérisé** en ce que la cage (4) est guidée en révolution au moyen de plusieurs roulements (5) qui sont répartis sur la périphérie et dont le diamètre extérieur est au plus égal à un tiers du diamètre extérieur de la cage (4).

2. Roulement selon la revendication 1, **caractérisé** en ce qu'au moins trois galets de soutien (5), qui sont montés à rotation sur la cage (4), roulent sur une surface de guidage (1a) coaxiale à la cage (4).

3. Roulement selon la revendication 2, **caractérisé** en ce que les galets de soutien (5) sont montés sur roulement.

4. Roulement selon la revendication 2 ou 3, **caractérisé** en ce que les galets de soutien (5) sont élastiquement précontraints contre la surface de guidage (1a).

5. Roulement selon la revendication 4, **caractérisé** en ce que les moyens élastiques (4f) pour la précontrainte des galets de soutien (5) sont réalisés d'un seul tenant avec la cage (4).

6. Roulement selon la revendication 4, **caractérisé** en ce que la cage (4) est conçue de telle sorte qu'elle possède une action élastique pour précontraindre les galets de soutien (5).

7. Roulement selon la revendication 1, **caractérisé** en ce que la cage (4) présente un élément rapporté annulaire (8) en matériau plus dur, sur lequel roulent les roulements (5) pour le guidage en révolution de la cage (4) (figure 10).

8. Roulement selon la revendication 7, **caractérisé** en ce que la cage (4) roule sur au moins trois galets de soutien (5) montés sur roulement (figures 10 à 13).

9. Roulement selon l'une quelconque des revendications 1 à 8, **caractérisé** en ce qu'au moins trois des corps de révolution (3) présentent un tourillon cylindrique coaxial (3a), qui coopère avec au moins un galet de soutien respectif (5) monté, sur roulement, à rotation sur la cage (4).

10. Roulement selon l'une quelconque des revendications 2 à 6, **caractérisé** en ce que la surface de guidage (1a) est configurée sur une bordure annulaire d'une bague extérieure (1) ou d'une bague intérieure (2) du roulement, sur un perçage (11) d'une pièce (12) recevant le roulement, ou sur un arbre qui a pour palier le roulement.

11. Roulement selon l'une quelconque des revendications 2 à 6, **caractérisé** en ce que des éléments (17) sont présents, qui produisent une modification, en fonction de la force centrifuge, des forces exercées sur les galets de soutien (5).

12. Roulement selon la revendication 11, **caractérisé** en ce que les galets de soutien (5) sont chacun fixés sur une bascule (14), qui est montée à pivotement dans la cage (4) et qui presse le galet de soutien (5) contre la surface de guidage (1a) sous l'action d'un ressort (15) et d'une force centrifuge produite par un contrepoids (17).

13. Roulement selon la revendication 12, **caractérisé** en ce qu'un élément d'amortissement (18) est installé entre la bascule (14) et la cage (4).

14. Roulement selon les revendications 6 et 11, **caractérisé** en ce que sont installés, sur la cage élastique (4) jouant le rôle de ressort de pression pour les galets de soutien (5), des contrepoids (17) dont les forces centrifuges sollicitent la cage de telle sorte que les galets de soutien (5) sont optimalement pressés contre la surface de guidage (1a) quelle que soit la vitesse de rotation.
